(19) Europäisches Patentamt
European Patent Office
Office européen des brevets

(11) EP 2 822 070 A1

(12) EUROPEAN PATENT APPLICATION
published in accordance with Art. 153(4) EPC

(43) Date of publication:
**07.01.2015 Bulletin 2015/02**

(21) Application number: **13755212.1**

(22) Date of filing: **27.02.2013**

(51) Int Cl.:
***H01M 4/86*** *(2006.01)* ***H01M 4/88*** *(2006.01)*
***H01M 8/02*** *(2006.01)* ***H01M 8/10*** *(2006.01)*
***H01B 1/06*** *(2006.01)*

(86) International application number:
**PCT/JP2013/055141**

(87) International publication number:
**WO 2013/129478 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.02.2012 JP 2012044209**

(71) Applicant: **Tokuyama Corporation**
**Shunan-shi, Yamaguchi 745-8648 (JP)**

(72) Inventors:
- **WATANABE, Shin**
  **Shunan-shi**
  **Yamaguchi 745-8648 (JP)**
- **FUKUTA, Kenji**
  **Shunan-shi**
  **Yamaguchi 745-8648 (JP)**
- **INOUE, Fumie**
  **Shunan-shi**
  **Yamaguchi 745-8648 (JP)**

(74) Representative: **Schlief, Thomas P.**
**Patentanwälte**
**Canzler & Bergmeier**
**Friedrich-Ebert-Straße 84**
**85055 Ingolstadt (DE)**

# (54) CATALYST ELECTRODE LAYER AND METHOD FOR PRODUCING SAME

(57) [Problem] To provide a catalyst electrode layer which has excellent durability and is easily controlled with respect to the cross-linking degree. [Solution] Provided is a catalyst electrode layer which is characterized by containing a catalyst for electrodes and an anion-conducting elastomer that is obtained by introducing a quaternary base-type anion exchange group into at least some aromatic rings in a copolymer of an aromatic vinyl compound and a conjugated diene compound or in a copolymer that is obtained by saturating some or all of the double bonds in the main chain by hydrogenating the conjugated diene part of the above-mentioned copolymer, in said anion-conducting elastomer, at least some quaternary base-type anion exchange groups forming a cross-linked structure.

EP 2 822 070 A1

## Description

### Technical Field

The present invention relates to a novel catalyst electrode layer and a method of manufacturing the catalyst electrode layer. The present invention also relates to a novel laminate including the catalyst electrode layer and a novel polymer electrolyte fuel cell including the laminate.

### Background Art

A fuel cell is a power generation system that takes out the chemical energy of a fuel as power, and fuel cells of several types, such as an alkaline type, a phosphoric acid type, a molten carbonate type, a solid electrolyte type and a polymer electrolyte type, are proposed and examined. Among them, polymer electrolyte fuel cells are expected as small and medium-sized low-temperature operation fuel cells for stationary power supplies and vehicle mounting because the operating temperature is particularly low.

This polymer electrolyte fuel cell is a fuel cell that uses, as an electrolyte, a solid polymer such as an ion exchange resin. As shown in Fig. 1, the polymer electrolyte fuel cell has a basic structure in which a space within a cell partition wall 1 having a fuel distribution hole 2 and an oxidizer gas distribution hole 3 each of which communicates with the outside is partitioned with a assembly where a fuel chamber-side catalyst electrode layer 4 and an oxidizer chamber-side catalyst electrode layer 5 are joined to both surfaces of a polymer electrolyte membrane 6, and a fuel chamber 7 that communicates with the outside through the fuel distribution hole 2 and an oxidizer chamber 8 that communicates with the outside through the oxidizer gas distribution hole 3 are formed. In the polymer electrolyte fuel cell of such a basic structure, a fuel composed of hydrogen gas or a liquid such as alcohol is supplied to the fuel chamber 7 through the fuel distribution hole 2, and an oxygen-containing gas such as pure oxygen or air which is an oxidizer is supplied to the oxidizer chamber 8 through the oxidizer gas distribution hole 3, and furthermore, an external load circuit is connected between the fuel chamber-side catalyst electrode layer and the oxidizer chamber-side catalyst electrode layer, with the result that electrical energy is generated by the following mechanism.

As the polymer electrolyte membrane 6, since a reaction field is alkaline and a metal other than precious metals can be used, the use of an anion exchange membrane is being examined. In this case, hydrogen, alcohol or the like is supplied to the fuel chamber, and oxygen and water are supplied to the oxidizer chamber, and thus in the oxidizer chamber-side catalyst electrode layer 5, a catalyst contained within the electrode is brought into contact with the oxygen and the water to generate hydroxide ions. While the hydroxide ions are conducted within the polymer electrolyte membrane 6 (anion exchange membrane) formed of the anion exchange membrane to move to the fuel chamber 7 and react with the fuel at the fuel chamber-side catalyst electrode layer 4 to generate water, electrons generated within the fuel chamber-side catalyst electrode layer 4 are moved through the external load circuit to the oxidizer chamber-side catalyst electrode layer 5, and the energy of this reaction is utilized as electrical energy.

In order for the polymer electrolyte fuel cell described above to be widely and generally used, it is necessary that it achieve a high output and its durability be more enhanced. Although one way to obtain a high output is to increase the operation temperature of the polymer electrolyte fuel cell, when the operation temperature is increased, the degradation of an ion exchange group in the anion exchange resin forming the catalyst electrode layer, the separation of the catalyst electrode layer and the like easily occurred. Consequently, the durability as the polymer electrolyte fuel cell may be reduced.

In order to solve the problem described above, the present inventors propose a catalyst electrode layer (see, for example, patent documents 1 and 2) having a cross-linked structure. In this method, when a catalyst electrode layer is formed from a catalyst electrode formation composition containing a precursor of an ion exchange resin into which an organic group having a halogen atom is introduced, a multifunctional quaternizing agent and an electrode catalyst, the halogen atom is made to react with the multifunctional quaternizing agent to form the catalyst electrode layer having a cross-linked structure. Patent document 2 discloses that this method is utilized to couple the ion exchange membrane and the catalyst electrode layer together with a cross-linked structure. With this method, it is possible to obtain a assembly in which the junction of the catalyst electrode layer and the ion exchange membrane is excellent and its durability is excellent.

However, in this method, since when the catalyst electrode layer is formed, the cross-linked structure is formed, the degree of cross-linking inevitably depends on the amount of multifunctional quaternizing agent contained in the catalyst electrode formation composition. In other words, since when the catalyst electrode layer is formed, the degree of cross-linking is determined, in order to form catalyst electrode layers having various degrees of cross-linking, it is necessary to individually prepare a catalyst electrode formation composition in which the amount of multifunctional quaternizing agent is changed.

**Related Art Document**

Patent Document

Patent document 1: Japanese Unexamined Patent Application Publication No. 2003-86193

Patent document 2: International Publication No. WO2007/072842 pamphlet

**Disclosure of the Invention**

**Problems to be Solved by the Invention**

Polymer electrolyte fuel cells are expected to be used in various fields in the future. Since the operating conditions of the polymer electrolyte fuel cell are naturally different according to its application, it is necessary to form the polymer electrolyte fuel cell (catalyst electrode layer) most suitable for the operating conditions. Hence, if it is possible to easily manufacture catalyst electrode layers having different degrees of cross-linking, it is possible to simplify the manufacturing of polymer electrolyte fuel cells suitable for various applications.

Hence, an object of the present invention is to obtain a catalyst electrode layer in which its durability is excellent and the degree of cross-linking is easily adjusted. A further object is to obtain a method of forming the catalyst electrode layer, a laminate in which the catalyst electrode layer and an anion exchange membrane are joined and a method of manufacturing the laminate and a polymer electrolyte fuel cell including the laminate.

**Means for Solving the Problem**

The present inventors have made thorough examination to overcome the problem described above. Consequently, they have found that in consideration of balance between durability and productivity, a catalyst electrode layer composed of an anion conductive elastomer having a specific composition and a cross-linked structure and an electrode catalyst can solve the above problem.

The present inventors have thought that the productivity can be enhanced if when the catalyst electrode layer is formed, not only the cross-linked structure is formed at the same time of the formation of the catalyst electrode layer but also a precursor layer of the catalyst electrode layer can be cross-linked afterward with a multifunctional quaternizing agent (hereinafter this cross-linking may be referred to as "post-cross-linking"). Then, they have examined types of polymer materials forming a matrix of the catalyst electrode layer, cross-linking agents, ion exchange groups and the like, and thereby have found that the foregoing problem can be solved by bringing the multifunctional quaternizing agent into contact with a catalyst electrode layer precursor composed of an anion conductive elastomer precursor where a halogen atom containing group is introduced into a copolymer having a specific composition and an electrode catalyst, with the result that the present invention is completed.

Specifically, according to a first aspect of the present invention, there is provided a catalyst electrode layer including: an anion conductive elastomer in which a quaternary base type anion exchange group is introduced into at least a part of an aromatic ring of a copolymer of an aromatic vinyl compound and a conjugated diene compound or a copolymer where a double bond of a main chain is partially or completely saturated by hydrogenating a conjugated diene part of the copolymer, and in which at least a part of the quaternary base type anion exchange group forms a cross-linked structure; and an electrode catalyst.

In the first aspect of the present invention, in order for the catalyst electrode layer to achieve excellent performance and further enhance its durability and productivity, it is preferable that a ratio of the aromatic vinyl compound in the copolymer be 5 to 80 mass %. The quaternary base type anion exchange group forming the cross-linked structure preferably has a quaternary ammonium group and an alkylene group. Furthermore, a water content of the anion conductive elastomer at a temperature of 40°C at a humidity of 90% RH is preferably 1 to 90%.

According to a second aspect of the present invention, there is provided a laminate in which the catalyst electrode layer described above is formed on a gas diffusion layer or an anion exchange membrane.

According to a third aspect of the present invention, there is provided a polymer electrolyte fuel cell including the laminate described above.

Furthermore, according to a fourth aspect of the present invention, there is provided a method of manufacturing the catalyst electrode layer described above, where a catalyst electrode precursor layer including an anion conductive elastomer precursor in which a "group that can react with a quaternizing agent" is introduced into at least a part of an aromatic ring of a copolymer of an aromatic vinyl compound and a conjugated diene compound or a copolymer where

a double bond of a main chain is partially or completely saturated by hydrogenating a conjugated diene part of the copolymer and an electrode catalyst is brought into contact with a multifunctional quaternizing agent such that the "group that can react with the quaternizing agent" and the multifunctional quaternizing agent are made to react with each other to cross-link the anion conductive elastomer precursor with a quaternary base type anion exchange group.

In the fourth aspect of the present invention, the "group that can react with a quaternizing agent" introduced into the aromatic ring of the anion conductive elastomer precursor and the multifunctional quaternizing agent react with each other, and thus the cross-linked structure is formed with the anion exchange group.

Hence, of the anion conductive elastomer precursor having the "group that can react with a quaternizing agent" and the multifunctional quaternizing agent, one is a compound that has a halogen atom at an end, and the other is a compound that has an atom having a lone pair as the corresponding organic group. The both form an onium salt at both the atoms, and the anion exchange groups are formed and the cross-linked structure is formed between both the anion exchange groups.

As can be understood from what has been described above, since the anion conductive elastomer precursor and the multifunctional quaternizing agent are coupled to each other to form the ion exchange group, the both need to have different atoms. Hence, when the anion conductive elastomer has a halogen atom at an end, the multifunctional quaternizing agent needs to be a compound that has an atom having a lone pair as the corresponding functional group. On the other hand, when the anion conductive elastomer precursor is a compound that has an atom having a lone pair, the multifunctional quaternizing agent needs to have a halogen atom as the corresponding functional group.

Among them, preferably in the fourth aspect of the present invention, the group that can react with the quaternizing agent introduced into the aromatic ring is a halogen atom containing group, and the multifunctional quaternizing agent is an alkylene diamine compound.

## Effects of the Invention

The catalyst electrode layer of the present invention has, as the catalyst electrode layer of a polymer electrolyte fuel cell, excellent catalytic performance, durability and junction. Hence, a polymer electrolyte fuel cell having the catalyst electrode layer of the present invention is excellent in durability and can be used at a higher temperature.

Furthermore, according to the method of the present invention, since the catalyst electrode layer can be formed by performing post-cross-linking on the catalyst electrode layer precursor, it is possible to easily form the catalyst electrode layer having a different degree of cross-linking. Consequently, it is possible to more efficiently produce polymer electrolyte fuel cells applied to various applications, and its industrial utilization value is significantly high.

## Brief Description of Drawings

**Fig. 1** A diagram showing an example of the structure of a polymer electrolyte fuel cell.

## Best Mode for Carrying Out the Invention

According to the present invention, there is provided a catalyst electrode layer including: an anion conductive elastomer in which a quaternary base type anion exchange group is introduced into at least a part of an aromatic ring of a copolymer of an aromatic vinyl compound and a conjugated diene compound or a copolymer where a double bond of a main chain is partially or completely saturated by hydrogenating a conjugated diene part of the copolymer (hereinafter these copolymers may be referred to as "styrene elastomer"), and in which at least a part of the quaternary base type anion exchange group forms a cross-linked structure; and an electrode catalyst.

The catalyst electrode layer of the present invention includes the anion conductive elastomer and the electrode catalyst. In the anion conductive elastomer, the quaternary base type anion exchange group is introduced into at least a part of the aromatic ring of the copolymer of the aromatic vinyl compound and the conjugated diene compound or the copolymer where a double bond of a main chain is partially or completely saturated by hydrogenating a conjugated diene part of the copolymer, and at least a part of the quaternary base type anion exchange group forms the cross-linked structure.

The "quaternary base type anion exchange group forms the cross-linked structure" indicates that the aromatic rings of the styrene elastomer are coupled to each other by the quaternary base type anion exchange group.

The anion conductive elastomer can be obtained by making a multifunctional quaternizing agent react with an anion conductive elastomer precursor in which a halogen atom containing group is introduced into at least a part of the aromatic ring of the copolymer of the aromatic vinyl compound and the conjugated diene compound or the copolymer where a double bond of a main chain is partially or completely saturated by hydrogenating a conjugated diene part of

the copolymer. The copolymer (styrene elastomer) that is a base resin will first be described.

(Copolymer: styrene elastomer)

The copolymer of the anion conductive elastomer described above is the copolymer of the aromatic vinyl compound and the conjugated diene compound or the copolymer where a double bond of a main chain is partially or completely saturated by hydrogenating a conjugated diene part of the copolymer.

This copolymer is not particularly limited but is preferably a flexible polymer whose Young's modulus is 1 to 300 MPa, preferably 20 to 250 MPa and more preferably 30 to 200 MPa. Hereinafter, this copolymer may be collectively referred to as the styrene elastomer. The Young's modulus is a value that is measured with a viscoelasticity measuring device at 25°c.

The styrene elastomer may be a random copolymer of the aromatic vinyl compound and the conjugated diene compound or a block copolymer. Among them, when post-cross-linking which will be described later is performed, a block copolymer is preferably used. In the case of a block copolymer, as the state of block, there are a di-block copolymer, a tri-block copolymer, a multi-block copolymer and the like, and among them, a tri-block copolymer is preferably used.

Examples of the aromatic vinyl compound of the styrene elastomer includes styrene, $\alpha$-methyl styrene, chloromethyl styrene, bromobutyl styrene, vinyl pyridine, vinyl imidazole, vinyl oxazoline, vinyl benzyl dimethyl amine and vinyl naphthalene. When chloromethyl styrene, bromobutyl styrene, vinyl pyridine, vinyl imidazole, vinyl oxazoline or vinyl benzyl dimethyl amine is used, it can be used as the anion conductive elastomer precursor without being processed by being copolymerized with the conjugated diene. When the halogen atom containing group is introduced afterward, with consideration given to the ease of introduction of the halogen atom containing group, the ease of a reaction between the halogen atom containing group and the multifunctional quaternizing agent and the like, styrene or $\alpha$-methyl styrene is preferably used.

Examples of the conjugated diene compound include butadiene, isoprene, chloroprene, 1,3-pentadiene, 2,3-dimethyl-1, 3-butadiene.

In the styrene elastomer, an aromatic vinyl compound content is not particularly limited but is preferably 5 to 80 mass % and more preferably 10 to 50 mass %. The aromatic vinyl compound content satisfactorily falls within the above range, and thus it becomes easy to introduce the multifunctional quaternizing agent, which will be described in detail later. As long as the effects of the present invention are not prevented, a monomer other than the aromatic vinyl compound and the conjugated diene compound can be put thereinto.

The number average molecular weight of the styrene elastomer is preferably 5000 to 300 thousand, more preferably 10 thousand to 200 thousand, particularly preferably 2 to 150 thousand and most preferably 3 to 130 thousand. When the conjugated diene part of the block copolymer or the random copolymer described above is hydrogenated, the hydrogenation rate is preferably 80% or more, and particularly preferably 90% or more but 100% or less. The styrene elastomer can be obtained by copolymerizing the aromatic vinyl compound and the conjugated diene compound in a known method such as anionic polymerization, cationic polymerization, coordination polymerization or radical polymerization. In particular, a styrene elastomer manufactured by living anionic polymerization is preferably used. Specific examples of the styrene elastomer include polystyrene-polybutadiene-polystyrene triblock copolymer (SBS) and polystyrene-polyisoprene-polystyrene triblock copolymer (SIS). They also include polystyrene-poly (ethylene-butylene)-polystyrene triblock copolymer (SEBS) and polystyrene-poly (ethylene- propylene)-polystyrene triblock (SEPS) copolymer obtained by hydrogenating SBS, SIS and the like.

(Anion conductive elastomer precursor)

In the present invention, the anion conductive elastomer precursor is a polymer that has a "group which can react with a quaternizing agent" in the aromatic ring of the styrene elastomer. The anion conductive elastomer precursor can be classified into two types according to the type of "group which can react with a quaternizing agent". One is a halogen atom containing elastomer in which the "group which can react with a quaternizing agent" is a halogen atom, and the other is a lone pair containing elastomer in which the "group which can react with a quaternizing agent" is a lone pair containing atom.

(Halogen atom containing elastomer)

With respect to the halogen atom containing elastomer, when a monomer having a halogen atom, for example, chloromethylstyrene is used as the monomer in the polymerization of the styrene elastomer, a polymer obtained is used as the anion conductive elastomer precursor (halogen atom containing elastomer) without being processed. When a monomer having no halogen atom is used, the halogen atom containing group is introduced into the obtained styrene elastomer, and thus the anion conductive elastomer precursor can be obtained.

A method of introducing the halogen atom containing group into the styrene elastomer is not particularly limited, and a known method is preferably adopted. The specific examples thereof include a method of making the aromatic ring of styrene react with formaldehyde and thereafter halogenating it, a method of making the aromatic ring of styrene react with halogenomethyl ether and a method of halogenating the aromatic ring of styrene, thereafter giving an alkyl group by Grignard reaction and further halogenating an alkyl chain end.

The ratio of the halogen atom containing group introduced into the styrene elastomer is preferably determined as necessary according to the ion exchange capacity and the degree of cross-linking (density) of the desired anion conductive elastomer. Among them, preferably, when the styrene elastomer in which the aromatic vinyl compound content is 5 to 80 mass % and preferably 10 to 50 mass % is used, the halogen atom is introduced into 50 to 100 mol % of the aromatic ring and further preferably 80 to 100 mol %.

Two or more halogen atom containing groups may be introduced into one aromatic ring. For example, a monomer having two or more halogen atoms in the aromatic ring is used as a starting material, and thus it is possible to manufacture the anion conductive elastomer precursor according to its structure.

<u>(Lone pair containing elastomer)</u>

As long as at least one organic residue is coupled to at least one atom such as nitrogen, sulfur, oxygen, phosphorus, selenium, tin, iodine or antimony having a lone pair present within a molecule, a cationic atom or atomic group is coordinated with the atom described above to form a cation (onium ion), the lone pair containing elastomer is not particularly limited, and various types can be used.

As the lone pair containing atom described above, in terms of the utility of the formed ion exchange resin, nitrogen, phosphorus or sulfur is preferably used, and nitrogen is particularly preferably used, and since it is possible to obtain a high degree of cross-linking, a lone pair containing polymer organic compound including, within the molecule, a plurality of atoms having a lone pair described above is preferably used.

With respect to the lone pair containing elastomer, when vinyl pyridine, vinyl imidazole, vinyl oxazoline or vinyl benzyl dimethyl amine is used as the monomer in the polymerization of the styrene elastomer, a polymer obtained is used as the anion conductive elastomer precursor (lone pair containing elastomer) without being processed. When a monomer having no lone pair containing atom is used, a substituent including the lone pair containing atom may be introduced into the obtained styrene elastomer.

The ratio of the lone pair containing atom introduced into the styrene elastomer is preferably determined as necessary according to the ion exchange capacity and the degree of cross-linking (density) of the desired anion conductive elastomer. Among them, preferably, when the styrene elastomer in which the aromatic vinyl compound content is 5 to 70 mass % and preferably 10 to 50 mass % is used, a group having the lone pair containing atom is introduced into 50 to 100 mol % of the aromatic ring and further preferably 80 to 100 mol %.

Two or more lone pair containing atoms may be introduced into one aromatic ring. For example, a monomer having two or more lone pair containing groups in the aromatic ring is used as a starting material, and thus it is possible to manufacture the anion conductive elastomer precursor according to its structure.

The anion conductive elastomer precursor such as the halogen atom containing elastomer or the lone pair containing elastomer described above is cross-linked with the multifunctional quaternizing agent, and thus it is possible to obtain the anion conductive elastomer. The catalyst electrode layer of the present invention can be composed of the anion conductive elastomer precursor, the multifunctional quaternizing agent and the electrode catalyst.

<u>(Multifunctional quaternizing agent)</u>

An anion conductive elastomer having a cross-linked structure can be synthesized by making the "group which can react with a quaternizing agent" of the anion conductive elastomer precursor described above react with the multifunctional quaternizing agent. In other words, the "group which can react with a quaternizing agent" of the anion conductive elastomer precursor reacts with the multifunctional quaternizing agent, and thus it is possible to obtain the anion conductive elastomer in which the cross-linked structure is formed by the quaternary base type anion exchange group. The multifunctional quaternizing agent described above is a compound that has a plurality of groups which react with the group which can react with a quaternizing agent (a halogen atom containing group or a group having a lone pair containing atom) to form an anion exchange group.

A reaction mechanism when the halogen atom containing elastomer and an alkylene diamine compound as the multifunctional quaternizing agent are used will be described below.

<u>Chemical formula 1</u> $(E)\text{-}X\,Z\text{-}(E) + R^1{}_2N\text{-}R^2\text{-}NR^1{}_2 \rightarrow (E)\text{-}N^+(X^-)(R^12)\text{-}R^2\text{-}N^+(X^-)(R^1{}_2)\text{-}(E)$

Here, E is an anion conductive elastomer (halogen atom containing elastomer), X is a halogen atom that is

coupled to the aromatic ring of E, $R^1$ is an alkyl group, $R^2$ is an alkylene group and N represents a nitrogen atom.

The multifunctional quaternizing agent differs depending on whether the anion conductive elastomer is a halogen atom containing elastomer or a lone pair containing elastomer.

The multifunctional quaternizing agent used when the anion conductive elastomer is a halogen atom containing elastomer will first be described.

(Multifunctional quaternizing agent for a halogen atom containing elastomer)

Examples of this multifunctional quaternizing agent include: a compound having two or more amino groups as a nitrogen containing compound; a compound having, as a phosphorus-containing compound, two or more phosphino groups such as bis (dimethyl phosphino) propane and bis (diphenylphosphino) propane; and a compound having, as a sulfur containing compound, two or more thio groups such as bis (methylthio) methane and bis (phenylthio) methane. A diamine, a triamine or a tetraamine is preferably used, and diamine is particularly preferably used.

As the polyamine compound of a diamine, a triamine or a tetraamine, for example, compounds disclosed in patent document 2 (International Publication No. WO2007/072842 pamphlet) can be used. Among them, examples thereof include an alkylene diamine compound and an aromatic diamine compound in which all are tertiary amines, an alkyl triamine compound and an aromatic triamine compound in which all are tertiary amines and furthermore, a polymer in which an alkyl amine having four or more tertiary amines is used as a skeleton.

Among these polyamine compounds described above, since its chemical stability after the formation of the cross-linked structure is satisfactory, and it has appropriate flexibility, an alkylene diamine compound is preferably used.

As the alkylene diamine compound described above, there is a compound shown in formula (1) below.

Chemical formula 2

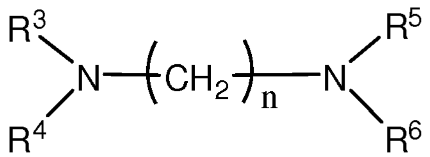

(1)

In the formula, $R^3$, $R^4$, $R^5$ and $R^6$ are alkyl groups having a carbon number of 1 to 4, and are preferably methyl groups, and n is an integer of 1 to 15, and preferably an integer of 2 to 8.

As specific alkylene diamine compounds, there are also compounds disclosed in patent document 2 (International Publication No. WO 2007/072842 pamphlet). Among these compounds, N, N, N', N'-tetramethyl-1,4-butanediamine, N, N, N', N'-tetramethyl-1,6-hexanediamine, N, N, N', N'-tetra-methyl-1,8-octanediamine and N, N, N', N'-tetramethyl-1,10-decanediamine can be particularly preferably used.

Then, the multifunctional quaternizing agent used when the anion conductive elastomer is a lone pair containing elastomer will be described.

(Multifunctional quaternizing agent for a lone pair containing elastomer)

As the multifunctional quaternizing agent described above, a compound having two or more halogeno groups is used, a dihalogeno compound, a trihalogeno compound or a tetoraharogeno compound is preferably used and a dihalogeno compound is particularly preferably used.

As these multifunctional quaternizing agents, there are compounds disclosed in patent document 2 (International Publication No. WO 2007/072842 pamphlet).

(Other quaternizing agents)

Although in the present invention, the anion conductive elastomer precursor can be cross-linked with only the multifunctional quaternizing agent, it is possible to combine a monofunctional quaternarizing agent and a multifunctional quaternizing agent. The monofunctional quaternarizing agent described above is a compound that has one group which reacts with a group which can react with a quaternizing agent (a halogen atom containing group or a group having a lone pair containing atom) to form an anion exchange group. The monofunctional quaternarizing agent also naturally differs depending on whether it is used for a halogen atom containing elastomer or a lone pair containing elastomer.

(Monofunctional quaternarizing agent for a halogen atom containing elastomer)

As the monofunctional quaternarizing agent described above, a trialkylamine, an aromatic amine or the like that is a tertiary amine is used. Among them, a trialkylamine having an alkyl group of a carbon number of 1 to 4 or an aromatic amine having a phenyl group is preferably used. Specific examples thereof include a trimethylamine, a triethylamine, a tripropylamine, a tributylamine, a diethylmethylamine, a dipropylmethyl amine, a dibutylmethylamine, a phenyldimethylamine and a phenyldiethylamine.

(Monofunctional quaternarizing agent for a lone pair containing elastomer)

As the monofunctional quaternarizing agent, there are alkyl halogen compounds. Among them, an alkyl halogen compound having an alkyl group of a carbon number of 1 or 2 is preferably used. Specific examples thereof include alkyl halogen compounds such as methyl iodide, methyl bromide, methyl chloride, ethyl iodide, ethyl bromide and ethyl chloride. A halogen compound having an aromatic group such as benzyl chloride can also be used.

(Anion conductive elastomer)

In the present invention, the anion conductive elastomer can be obtained by making the anion conductive elastomer precursor described above react with the multifunctional quaternizing agent described above and as necessary, the monofunctional quaternarizing agent.

In the anion conductive elastomer described above, a quaternary base type anion exchange group is introduced into the aromatic ring of the molecule, and at least a part of the quaternary base type anion exchange group forms a cross-linked structure. As the quaternary base type anion exchange group described above, a quaternary ammonium group or a quaternary pyridinium group which are strong base groups in anion conductivity is preferably used. Hence, examples of a group which can react with the quaternizing agent of the quaternary base type anion exchange group or a group which has a lone pair containing atom include primary to tertiary amino groups, a pyridyl group, an imidazole group, a phosphonium group and a sulfonium group, and primary to tertiary amino groups and a pyridyl group are preferably used.

In order for the anion conductive elastomer described above to achieve excellent durability and junction, in a method of measuring a water content which will be described in details in examples below, the water content is preferably 1 to 90% at a temperature of 40°C at a humidity of 90%RH, and further preferably 10 to 60%.

The water content is correlated with the degree of cross-linking, and as the degree of cross-linking is increased, its value is decreased whereas as the degree of cross-linking is decreased, its value is increased. The water content (temperature 40°C, humidity 90%RH) of each of anion conductive elastomers manufactured by varying the ratio of the anion conductive elastomer precursor, the multifunctional quaternizing agent and the monofunctional quaternarizing agent is measured, and thus a calibration curve between the water content and the ratio of the multifunctional quaternizing agent is produced, with the result that it is possible to determine the degree of cross-linking, that is, the ratio of the multifunctional quaternizing agent that is used. Then, when this calibration curve is produced, a water content in the catalyst electrode layer at a temperature of 40°C at a humidity of 90%RH is measured, and thus it is possible to determine the degree of cross-linking. Hence, even when the catalyst electrode layer is formed by a method of the post-cross linking which will be described later, a water content in the catalyst electrode layer at a temperature of 40°C at a humidity of 90%RH is measured, and thus it is also possible to determine the degree of cross-linking (the ratio of the multifunctional quaternizing agent that is used). In other words, since the electrode catalyst included in the catalyst electrode layer little affects the value of the water content, the water content in the catalyst electrode layer is measured, and thus it is possible to determine the degree of cross-linking.

The calibration curve is preferably produced according to each of the components (the anion conductive elastomer precursor, the multifunctional quaternizing agent and the monofunctional quaternarizing agent) that are used.

In the degree of cross-linking (the ratio of the multifunctional quaternizing agent that is used) determined from this point of view, a ratio (Fm/Bm) of the total number (Fm) of moles of a group that reacts with a group in the multifunctional quaternizing agent to the total number (Bm) of moles of the group that can react with the quaternizing agent in the anion conductive elastomer precursor is preferably 0.005 to 0.30. The ratio satisfactorily falls within this range, and thus it is possible to enhance the durability and the junction and increase a cell voltage. In consideration of the effects of improvement of the durability, the junction and the cell voltage, the degree of cross-linking (Fm/Bm) is more preferably 0.01 to 0.25, further preferably 0.01 to 0.20 and particularly preferably 0.02 to 0.20.

The anion conductive elastomer used in the present invention has a part of the conjugated diene compound that is partially or completely saturated, and this part maintains its hydrophobicity. Hence, even when the degree of cross-linking is low, since the anion conductive elastomer described above is hardly soluble in water, the anion conductive elastomer is prevented from flowing out and dropping off by water. Thus, by lowering the degree of cross-linking, it is

possible to maintain the flexibility of the anion conductive elastomer and to keep the physical strength thereof.

Although the anion conductive elastomer is not particularly limited, in order to provide satisfactory ion conductivity and enhance the electrical efficiency, the ion exchange capacity is preferably 0.5 to 10 mmol / g and further preferably 1 to 8 mmol / g. This anion exchange capacity can be determined by measurement from the formed catalyst electrode layer.

The water content and the ion exchange capacity can be adjusted by the types and ratios of multifunctional quaternizing agent and monofunctional quaternarizing agent.

As described above, the degree of cross-linking (Fm/Bm) is preferably 0.005 to 0.30, more preferably 0.01 to 0.25, further preferably 0.01 to 0.20 and particularly preferably 0.02 to 0.20. When the multifunctional quaternizing agent and the monofunctional quaternarizing agent are used simultaneously to form the anion conductive elastomer, among the groups that can react with the quaternizing agent in the anion conductive elastomer precursor, the group (group that does not react with the multifunctional quaternizing agent) that is not involved in the cross-linking preferably reacts with the monofunctional quaternarizing agent. In other words, when it is assumed that the number of moles of the group that reacts with the monofunctional quaternarizing agent in the anion conductive elastomer is Sm, the equation Fm + Sm = Bm preferably holds true.

<u>(Electrode catalyst)</u>

As the electrode catalyst, a known catalyst can be used. The metal particles of platinum, gold, silver, palladium, iridium, rhodium, ruthenium, tin, iron, cobalt, nickel, molybdenum, tungsten, vanadium, their alloys and the like that promote the oxidation reaction of hydrogen and the reduction reaction of oxygen can be used without limitation, and a platinum group catalyst is preferably used because its catalytic activity is excellent.

The diameter of the metal particles of these catalysts is normally 0.1 to 100 nm, and more preferably 0.5 to 10 nm. Although as the particle diameter is decreased, the catalytic performance is increased, it is difficult to produce the catalyst of less than 0.5 nm whereas when the particle diameter is more than 100 nm, it is impossible to obtain sufficient catalytic performance. These catalysts may be used by being previously carried by a conductive agent. Although the conductive agent is not particularly limited as long as it is an electron conductive material, for example, carbon black such as a furnace black or an acetylene black, activated carbon, graphite and the like are generally used singly or by being mixed. A content of the catalyst is normally 0.01 to 10 $mg/cm^2$, and is more preferably 0.1 to 5.0 $mg/cm^2$ by metal weight per unit area in a state where the catalyst electrode layer is formed in the shape of a sheet.

As a binder that is added as necessary, various types of thermoplastic resin are generally used, and examples that can be preferably used include polytetrafluoroethylene, polyvinylidene fluoride, tetrafluoroethylene-perfluoroalkyl vinyl ether copolymer, polyether ether ketone, polyether sulfone, styrenebutadiene copolymer and acrylonitrile-butadiene copolymer. A content of the binder is preferably 5 to 25 weight % of the catalyst electrode layer described above. The binder may be used singly or two or more types may be used by being mixed.

A method of forming the above catalyst electrode layer will then be described.

<u>(Method of forming the catalyst electrode layer)</u>

In the catalyst electrode layer of the present invention, the quaternary base type anion exchange group is introduced into the aromatic ring of the styrene elastomer described above, and at least a part of the quaternary base type anion exchange group described above includes the anion conductive elastomer in which a cross-linked structure is formed and the electrode catalyst.

In the present invention, it is possible to manufacture the catalyst electrode layer directly from a catalyst electrode layer formation composition containing the anion conductive elastomer precursor, the multifunctional quaternizing agent and the electrode catalyst. For example, the catalyst electrode layer formation composition can be formed into the catalyst electrode layer by roll molding or extrusion molding. Furthermore, the catalyst electrode layer formation composition containing a solvent is applied on any base material (for example, the anion exchange membrane or a gas diffusion layer formed of porous carbon paper or the like), and the solvent is dried, with the result that it is also possible to form the catalyst electrode layer.

In the present invention, the thickness of the catalyst electrode layer is not particularly limited, and is preferably determined as necessary according to an actual application. In general, the thickness is preferably 0.1 to 50 μm, and further preferably 0.5 to 20 μm.

<u>(Method of forming the catalyst electrode layer with the post-cross-linking)</u>

According to the method of the present invention, it is also possible to manufacture the catalyst electrode layer by the following method. Specifically, a catalyst electrode precursor layer containing the anion conductive elastomer precursor and the electrode catalyst is formed, the catalyst electrode precursor layer and the multifunctional quaternizing

agent are brought into contact with each other, and thus the ion conductive elastomer precursor described previously is cross-linked with the quaternary base type anion exchange group with the result that it is possible to form the catalyst electrode layer. This method (post-cross linking method) makes it possible to manufacture a large number of catalyst electrode precursor layers of the same type and to form various catalyst electrode layers of different degrees of cross-linking by bring a multifunctional quaternizing agent containing liquid of a different concentration into each catalyst electrode layer to change a content of the multifunctional quaternizing agent in the catalyst electrode layer.

The reason why the catalyst electrode layer of the present invention can be formed by the method described above is not clear but it is estimated as follows. Specifically, the composition of the styrene elastomer used probably makes the post-cross linking possible. Since the styrene elastomer is composed of the copolymer of the aromatic vinyl compound and the conjugated diene compound, the styrene elastomer has a part that is flexible and has a good mobility in the polymer chain. Hence, the multifunctional quaternizing agent is brought into a state where it easily makes contact with the halogen atom containing group of the aromatic ring. Then, even when the multifunctional quaternizing agent is brought into contact with the temporarily formed catalyst electrode precursor layer, the anion conductive elastomer precursor and the multifunctional quaternizing agent in the catalyst electrode precursor layer are probably made to easily react with each other. Consequently, probably, the anion conductive elastomer cross-linked by the quaternary base type anion exchange group is formed, and thus it is possible to manufacture the catalyst electrode layer of the present invention. Since such an effect is probably and particularly excellent, the styrene elastomer is preferably a block copolymer, and a content of the aromatic vinyl compound is preferably 5 to 80 mass % and more preferably 30 to 70 mass %.

On the other hand, in a matrix resin having a conventional cross-linked structure, a large part of the polymer chain is formed of the aromatic vinyl compound. Hence, probably, when the catalyst electrode layer is formed, unless the catalyst electrode layer formation composition contains the anion conductive polymer precursor (polymer having the halogen atom containing group) and the multifunctional quaternizing agent, it is impossible to form the cross-linked structure.

<u>(Formation of the catalyst electrode precursor layer)</u>

In order to form the catalyst electrode layer with the post-cross linking, it is preferable to adopt the following method. A method of forming the catalyst electrode precursor layer will first be described. For example, a catalyst electrode precursor layer composition containing the anion conductive elastomer precursor and the electrode catalyst can be formed into the catalyst electrode precursor layer by roll molding or extrusion molding.

Furthermore, the catalyst electrode precursor layer composition containing a solvent is applied to a base material, and the solvent is dried, with the result that it is also possible to form the catalyst electrode precursor layer. The solvent is not particularly limited, and a single solution or a mixing solution of tetrahydrofuran, chloroform, dichloromethane, dimethylformamide, dimethyl sulfoxide, 1-propanol, toluene, benzene, ethyl acetate, acetone or the like can be used.

The catalyst electrode precursor layer composition containing the solvent is preferably put such that it is applied to any base material and thus a layer can be formed. Specifically, preferably, the total solid content of the anion conductive elastomer precursor and the electrode catalyst is 100 mass parts, and the solvent is 1 to 20 mass parts.

The base material to which the catalyst electrode precursor layer composition is applied is not particularly limited. For example, on a base material made of inorganic material such as glass, the catalyst electrode precursor layer composition can be applied. In such a case, preferably, the base material and the catalyst electrode precursor layer are separated, the catalyst electrode precursor layer obtained is laminated on the anion exchange membrane and they are, for example, pressed and joined.

When the polymer electrolyte fuel cell is formed, the catalyst electrode precursor layer composition described above can be applied on the anion exchange membrane or can be applied on a support layer that supports the catalyst electrode layer, for example, on a porous base material. Preferably, the catalyst electrode precursor layer composition applied to the support layer is dried and joined to the anion exchange membrane.

When the anion exchange membrane is used as the base material, one of known anion exchange membranes can be used. Among them, a hydrocarbon anion exchange membrane is preferably used. As a specific example thereof, there is a membrane that is filled with an ion exchange resin into which a desired anion exchange group is introduced by performing processing such as amination or alkylation on a chloromethylstyrene-divinylbenzene copolymer or a copolymer such as vinylpyridine-divinylbenzene. Although the anion exchange resin membrane is generally supported by a base material such as woven fabric made of thermoplastic resin, non-woven fabric or a porous membrane, as the base material, a base material that is formed of a porous membrane made of thermoplastic resin, for example, a polyolefin resin such as polyethylene, polypropylene or polymethyl pentene or a fluorine resin such as polytetrafluoroethylene, poly (tetrafluoroethylene-hexafluoropropylene) or polyvinylidene fluoride is preferably used because its gas permeability is low and its thickness can be reduced. In order to reduce its electrical resistance and provide a mechanical strength necessary as a support membrane, the hydrocarbon anion exchange membrane preferably and normally has a thickness of 5 to 200 $\mu$m and more preferably 8 to 150 $\mu$m.

In order to enhance intimate contact with the catalyst electrode layer, for example, a junction layer formed of the anion conductive elastomer described above may be laminated on the anion exchange membrane. Thickness of the junction layer is preferably 0.1 to 10 μm.

As the base material, as described above, the porous membrane that supports the catalyst electrode layer and that can be used as the gas diffusion layer can also be used. Although the porous base material is not particularly limited, a porous membrane made of carbon is preferably used, for example, carbon fiber woven fabric or carbon paper or the like can be used. The thickness of the support layer is preferably 50 to 300 μm, and its porosity is preferably 50 to 90%. In the present invention, when the catalyst electrode layer is formed by the post-cross linking, this carbon porous membrane is preferably used. This is because although after the formation of the catalyst electrode precursor layer, the catalyst electrode precursor layer and the multifunctional quaternizing agent are brought into contact, the carbon porous membrane is not deformed such as swelling.

The thickness of the catalyst electrode precursor layer is not particularly limited, and the catalyst electrode precursor layer is preferably adjusted so as to have a desired thickness. Since the catalyst electrode layer and the catalyst electrode precursor layer are substantially the same as each other in thickness, the thickness of the catalyst electrode precursor layer is preferably 0.1 to 50 μm, and further preferably 0.5 to 20 μm.

A preferred method of performing the post-cross linking will then be described.

<u>(Preferred method of performing the post-cross-linking)</u>

First, on the support layer (carbon porous membrane) functioning as the gas diffusion layer or the polymer electrolyte membrane (anion exchange membrane), the catalyst electrode precursor layer composition is applied. Then, a solvent is dried, and the catalyst electrode precursor layer is formed on the carbon porous membrane. Furthermore, the catalyst electrode precursor layer and the multifunctional quaternizing agent are brought into contact, and thus the anion conductive elastomer precursor within the catalyst electrode precursor layer is cross-linked by the quaternary base type anion exchange group.

Here, as the materials used, as described above, the catalyst electrode precursor layer composition and the multifunctional quaternizing agent are preferably used. Among them, in the following ratio of preparation, the catalyst electrode precursor layer and the multifunctional quaternizing agent are preferably brought into contact.

The contact between the catalyst electrode precursor layer and the multifunctional quaternizing agent is not particularly limited, and as necessary, a method of immersing the catalyst electrode precursor layer in the multifunctional quaternizing agent diluted in the solvent, a method of spraying the multifunctional quaternizing agent to the catalyst electrode precursor layer or the like is used. Among them, the immersion method is preferably adopted.

The conditions of the immersion are preferably determined as necessary according to the styrene elastomer and the multifunctional quaternizing agent used, the degree of cross-linking. For example, the immersion is preferably performed at a temperature of 10 to 50°C for 4 to 48 hours. In the immersion, a solvent can also be used, and as the solvent, there is a solvent that does not react with a group that can react with the quaternizing agent or a group having a lone pair containing atom, for example, tetrahydrofuran, acetone, toluene or the like. However, when the multifunctional quaternizing agent is a liquid, it is not necessary to use a solvent.

According to the method of the present invention, it is possible to easily vary the degree of cross-linking. In order in that, when the catalyst electrode precursor layer and the multifunctional quaternizing agent are brought into contact, the monofunctional quaternarizing agent can also be used.

In the post-cross linking described above, the amount of multifunctional quaternizing agent used (charged amount) is preferably determined as necessary according to the multifunctional quaternizing agent used, the type of "group that can react with the quaternizing agent", the desired degree of cross-linking, the ion exchange capacity and the like. Specifically, when the number of moles of all functional groups (all groups reacting with the group that can react with the quaternizing agent) of the multifunctional quaternizing agent is assumed to be n1, for 1 mole of the group that can react with the quaternizing agent included in the anion conductive elastomer precursor, n1 is preferably 0.01 to 10 moles, and further preferably 0.01 to 2 moles. Furthermore, in consideration of, for example, reactivity between the multifunctional quaternizing agent used and the "group that can react with the quaternizing agent", the amount of multifunctional quaternizing agent used (charged amount) is preferably adjusted as necessary so as to satisfy the degree of cross-linking (Fm/Bm) described previously.

When in the post-cross linking, the monofunctional quaternarizing agent is used, any one of a method of bringing a mixture of the multifunctional quaternizing agent and the monofunctional quaternarizing agent into contact with the catalyst electrode precursor layer, a method of bringing the monofunctional quaternarizing agent into contact and thereafter bringing the multifunctional quaternizing agent into contact and a method of bringing the multifunctional quaternizing agent into contact and thereafter bringing the monofunctional quaternarizing agent into contact may be adopted.

The amount of monofunctional quaternarizing agent used is preferably determined by the desired degree of cross-linking in consideration of the ratio of the multifunctional quaternizing agent used together. Since the degree of

cross-linking at the time of an actual reaction is determined by the number of functional groups included in the multifunctional quaternizing agent, the difference of the reactivity between the monofunctional quaternarizing agent and the multifunctional quaternizing agent and the like, in order to achieve the desired degree of cross-linking, it is preferable to change the ratio of the monofunctional quaternarizing agent and the multifunctional quaternizing agent to perform tests several times and thereafter determine the degree of cross-linking. Since there is a correlation between the results of the tests and the water content that will be described in detail, a calibration curve between the water content and the ratio of multifunctional quaternizing agent used is formed, and thus it is possible to estimate, from the formed catalyst electrode layer, the ratio of multifunctional quaternizing agent used. Although the electrode catalyst is included in the catalyst electrode layer, when the amount of the catalyst is found, the water content is determined in consideration of the amount of the catalyst, and thus it is possible to determine the water content of the anion conductive elastomer and furthermore, it is possible to estimate the ratio of multifunctional quaternizing agent used. When the amount of the catalyst is not clear, since the ash of the catalyst electrode layer is equal to the amount of the catalyst, the ash is preferably measured.

However, with respect to the amount of multifunctional quaternizing agent used and monofunctional quaternarizing agent used as necessary, the total amount thereof is preferably equal to or more than the amount of group that can react with the quaternizing agent included in the anion conductive elastomer precursor.

Even in the above-described formation of the catalyst electrode layer by the post-cross linking, as described in the column of the anion conductive elastomer discussed above, the water content of the catalyst electrode layer (anion conductive elastomer) at a temperature of 40°C at a humidity of 90%RH is preferably set at 1 to 90% and further preferably is set at 10 to 60%. The ion exchange capacity of the catalyst electrode layer (anion conductive elastomer) is preferably set at 0.5 to 10 mmol / g and further preferably at 1 to 8 mmol / g. The types of multifunctional quaternizing agent and monofunctional quaternarizing agent and the ratio of those used are preferably adjusted as necessary so as to satisfy these requirements.

After the catalyst electrode precursor layer and the multifunctional quaternizing agent are brought into contact, an excessive amount of multifunctional quaternizing agent is preferably removed by a washing operation. Furthermore, when a counter ion is a halogen atom, it is possible to transform it into a hydroxide ion, a bicarbonate ion, a carbonate ion or the like. A transformation method is not particularly limited, and a known method can be adopted. After the transformation of the counter ion, an excessive number of ions is preferably removed by washing.

<u>(Polymer electrolyte fuel cell)</u>

With the catalyst electrode layer formed on the support layer (carbon porous membrane) functioning as the gas diffusion layer or the polymer electrolyte membrane (anion exchange membrane) manufactured as described above, for example, it is possible to assemble the polymer electrolyte fuel cell configured as shown in Fig. 1.

In other words, when the catalyst electrode layer is formed on the support layer functioning as the gas diffusion layer, two of this are used to sandwich the ion exchange membrane on the side where the catalyst electrode layer is formed. In this way, it is possible to realize the state where the reference symbols 4, 5 and 6 of Fig. 1 are assembled. Alternatively, when the catalyst electrode layer is directly formed on both surfaces of the ion exchange membrane, it can be used without being processed or by being overlaid on the support member (carbon porous membrane) functioning as the gas diffusion layer for enhancing the gas diffusion.

An example of a hydrogen fuel will be illustrated below using the configuration of Fig. 1. A hydrogen gas humidified is supplied to the side of the fuel chamber, and oxygen or air humidified is supplied to the side of an air pole, and thus it is possible to perform power generation. Since there is an optimum value of the quantity of flow for each of them, a voltage value or a current value when a predetermined load is applied is measured, and it is possible to set it such that it is maximized. Humidification is performed in order to prevent the ion exchange membrane and the catalyst electrode layer from being dried to reduce the ion conductivity, and this can likewise be optimized. Although as a reaction temperature within the fuel cell is increased, a higher output can be obtained, since the high temperature facilitates the degradation of the ion exchange membrane and the catalyst electrode layer, they are normally used at temperatures ranging from the room temperature to 100°C or less.

In general, the catalyst electrode layer includes the catalyst and an ion conductive resin. The ion conductive resin is swelled and deformed by the application of heat under the presence of water, and this reduces the diffusion of the fuel and an oxidizer gas, with the result that the fuel cell output is disadvantageously lowered. Since in the catalyst electrode layer of the present invention, the anion conductive elastomers are cross-linked with each other, the swelling and deformation described above are probably unlikely to be caused. Hence, it is possible to use the catalyst electrode layer without lowering the output performance under a high temperature.

Examples

Although the present invention will be described in detail below using examples, the present invention is not limited to these examples.

(Method of synthesizing an anion conductive elastomer precursor 1)

20 g of a styrene elastomer that is a polystyrene-poly (ethylene-butylene)-polystyrene copolymer (Young's modulus at 25°C: 30 MPa, the number average molecular weight: 30,000, the aromatic (styrene) content: 30 mass %, the hydrogenation rate: 99%) were dissolved in 1000 ml of chloroform, 100 g of chloromethyl ethyl ether and 100 g of anhydrous tin chloride $SnCl_4$ were added under ice cooling and thereafter a reaction was conducted at 100°C for three hours. Then, with a large amount of methanol, the polymer was precipitated and was thereafter separated, with the result that an anion conductive elastomer precursor 1 which was chloromethylated by vacuum drying was obtained.

(Preparation of a reference sample)

As the multifunctional quaternizing agent, N, N, N', N'-tetramethyl-1,6-butanediamine was used, and as the monofunctional quaternarizing agent, trimethylamine ($^{13}C$ isotope) was used. In a mixture solution in which the ratios of these quaternizing agents were varied as in Table 1, the anion conductive elastomer precursor described above was immersed, and various catalyst electrode layers for forming a calibration curve were prepared. The results are shown in Table 1. The measurements of the water content and the ion exchange capacity were performed in the same manner as the measurement of a laminate to be described below.

Table 1

| Anion conductive elastomer precursor | Monofunctional quaternarizing agent | Multifunctional quaternizing agent | 40°C, 90%RH water content (%) | Ion exchange capacity (mmol/g) | Degree of cross-linking |
|---|---|---|---|---|---|
| Anion conductive elastomer precursor 1 | $^{13}C$-trimethylamine 30% aqueous solution 18.6 g (0.1 mol) | N, N, N', N'-tetramethylamine-1,6-hexanediamine 1.7 g (0.01 mol) | 29 | 1.7 | 0.006 |
| Anion conductive elastomer precursor 1 | $^{13}C$-trimethylamine 30% aqueous solution 18.6 g (0.1 mol) | N, N, N', N'-tetramethylamine-1,6-hexanediamine 8.6 g (0.05 mol) | 26 | 1.7 | 0.02 |
| Anion conductive elastomer precursor 1 | $^{13}C$-trimethylamine 30% aqueous solution 18.6 g (0.1 mol) | N, N, N', N'-tetramethylamine-1,6-hexanediamine 17.2 g (0.1 mol) | 23 | 1.7 | 0.08 |
| Anion conductive elastomer precursor 1 | $^{13}C$-trimethylamine 30% aqueous solution 9.3 g (0.05 mol) | N, N, N', N'-tetramethylamine-1,6-hexanediamine 17.2 g (0.1 mol) | 17 | 1.7 | 0.14 |
| Anion conductive elastomer precursor 1 | $^{13}C$-trimethylamine 30% aqueous solution 1.9 g (0.01 mol) | N, N, N', N'-tetramethylamine-1,6-hexanediamine 17.2 g (0.1 mol) | 10 | 1.7 | 0.20 |
| Anion conductive elastomer precursor 1 | Trimethylamine 30% aqueous solution 18.6 g (0.1 mol) | --- | 41 | 1.7 | 0 |

When as shown in Table 1, the ratio of the quaternizing agent was varied to prepare the catalyst electrode

layer of the present invention, as the ratio of the multifunctional quaternizing agent was increased, the water content was decreased. The ion exchange capacity was the same for any case. Hence, the difference of the water content probably depends on the quantity of the cross-linked structures by the multifunctional quaternizing agent. In other words, it has been shown that the degree of cross-linking can be controlled by the ratio of the multifunctional quaternizing agent.

It is possible to find the degree of cross-linking of the prepared catalyst electrode layers by $^{13}C$-NMR spectrum. Since here, as the monofunctional quaternarizing agent, trimethylamine containing the $^{13}C$ isotope was used, it is possible to determine its amount by $^{13}C$-NMR spectrum. When the peak area of the trimethylamine obtained from the catalyst electrode layer prepared with only the trimethylamine ($^{13}C$ isotope), which is the monofunctional quaternarizing agent, is assumed to be 1, and a peak area obtained by the measurement of each catalyst electrode layer is assumed to be P, it is possible to calculate the degree of cross-linking, the degree of cross-linking = 1 - P (Here, it is assumed to be 0 since $^{13}C$ origined from other carbon atoms are small amount). The degrees of cross-linking obtained are also shown in Table 1.

Example 1

(Method of preparing a laminate: method of laminating a catalyst electrode precursor layer on the ion exchange membrane and thereafter forming the laminate)

A catalyst electrode precursor layer composition was prepared by taking out 1 g of the anion conductive elastomer precursor 1, dissolving it in 100 ml of chloroform, adding 2 g of a catalyst (catalyst in which platinum particles having a particle diameter of 2 to 10 nm were carried on carbon particles having a primary particle diameter of 30 to 50 nm) and dispersing them. This was applied on a 23 mm square (about 5 $cm^2$) on an anion exchange membrane (the anion exchange capacity: 1.8 mmol / g, the water content at 25°C: 25 mass %, the thickness of the dried membrane: 28 $\mu$m, the outer dimensions: 40 mm square), and was thereafter dried, with the result that a membrane electrode assembly intermediate (the laminate structure of the anion exchange membrane/the catalyst electrode precursor layer) was obtained. The membrane electrode assembly intermediate was immersed in a mixture solution of a monofunctional quaternarizing agent (17.7 g of 30% trimethylamine aqueous solution (0.1 mol of trimethylamine) and a multifunctional quaternizing agent (1.7 g of N, N, N', N'-tetramethylamine-1,6-hexanediamine (0.01 mol). After 48 hours, it was taken out, washed and dried, and thus the laminate was obtained. In the laminate obtained, the thickness of the catalyst electrode layer was 5 $\mu$m.

(Method of measuring a water content: the water content at a temperature of 40°C and a humidity of 90% RH)

The laminate obtained was put into a vacuum oven, was dried at 50°C under a reduced pressure of 10 mm Hg for 12 hours and its weight was measured (which is assumed to be W1). Furthermore, this gas diffusion electrode was left as it was in a glove box whose humidity was adjusted to be 90% RH at 40°C for 12 hours, water was absorbed and thereafter its weight was measured (which is assumed to be W2). In the same operation, the weight (which is assumed to be W3) of only the anion exchange membrane having the same area as the laminate after drying under a reduced pressure and the weight (which is assumed to be W4) after the adjustment of the humidity to 90% RH were measured.

Here, the water content was determined by the following formula.

$$\text{Water content} = (W2 - W4 - (W1 - W3)) / (W1 - W3)$$

(Method of measuring an ion exchange capacity)

The prepared laminate was immersed in 1 (mol/l) HCl aqueous solution for 10 hours or more so as to become a chlorine ion type, and was thereafter substituted for an nitrate ion type with 1 (mol/l) $NaNO_3$ aqueous solution, and the quantity of free chlorine ions was measured by ion chromatograph (ICS-2000 made by Nippon Dionex K.K.). Analytical conditions are as follows.

Analytical column: IonPac AS-17 (made by Nippon Dionex K.K.)
Eluent: 35 (mmol / L) KOH aqueous solution 1 ml/min
Column temperature: 35°C

The quantitative value here is assumed to be A (mol). Then, the same laminate was immersed in 1 (mol/l) HCl aqueous solution for 4 hours or more, and was dried under a reduced pressure at 60°c for 5 hours and its weight was

measured. The weight here is assumed to be W2 (g).

The anion exchange membrane having the same area as the laminate was immersed in 1 (mol/l) HCl aqueous solution for 10 hours or more so as to become a chlorine ion type, and was thereafter substituted for an nitrate ion type with 1 (mol/l) $NaNO_3$ aqueous solution, and the quantity of free chlorine ions was measured by ion chromatograph (ICS-2000 made by Nippon Dionex K.K.). The quantitative value here is assumed to be B (mol). Then, the same anion exchange membrane was immersed in 1 (mol/l) HCl aqueous solution for 4 hours or more, and was dried under a reduced pressure at 60°C for 5 hours and its weight was measured. The weight here is assumed to be W2 (g).

Based on the measurement value described above, an ion exchange capacity was calculated by the following formula.

$$\text{Ion exchange capacity} = (A - B) \times 1000 / (W1 - W2)\ [\text{mmol} / \text{g} - \text{dried weight}]$$

(Method of assembling a fuel cell)

A membrane electrode assembly (MEA) was obtained by using two carbon porous membranes (HGP-H-060 made by Toray Industries, Inc., its thickness of 200 μm), which was cut into 23 mm square (about 5 $cm^2$), and laminating them to the catalyst electrode layer on both surfaces of the laminate described above one by one. The MEA was assembled into the fuel cell shown in Fig. 1.

(Power generation output test method)

As a fuel gas, hydrogen (100 ml /min) humidified at 50°C to 100% RH was supplied to the fuel cell, and as an oxidizer gas, air (200 ml /min) humidified at 50°C to 100% RH was supplied thereto. The temperature of the fuel cell was set at 50°C. A voltage value when a current of 500 mA was taken out of this cell was measured.

(Power generation durability test method)

As a fuel gas, hydrogen (100 ml /min) humidified at 80°C to 100% RH was supplied to the fuel cell, and as an oxidizer gas, air (200 ml /min) humidified at 80°C to 100% RH was supplied thereto. The temperature of the fuel cell was set at 80°C. In this state, a time until which the voltage value became one-half the initial value was measured.

The results of the measurements described above (the water content, the ion exchange capacity, the power generation output test (cell voltage) and the power generation durability test (durability time)) are shown in Table 2.

Examples 2 to 6

Except that a laminate was prepared using the anion conductive elastomer precursor 1 and the monofunctional quaternarizing agent and the multifunctional quaternizing agent shown in Table 2, the same operation as in example 1 was performed. The thickness of the catalyst electrode layer in the laminate was the same as in example 1. The water content of the laminate obtained was measured, and thereafter the laminate was assembled into the fuel cell and evaluation in the output test and the durability test was performed in the same manner as in example 1. The results of these measurements are shown in Table 2.

The followings have been found from the results of these examples 1 to 6.

The water content was first varied by varying the ratio of the quaternizing agent, and its value was decreased as the amount of multifunctional quaternizing agent was increased. This is because the degree of cross-linking of the anion conductive elastomer was increased as the amount of multifunctional quaternizing agent was increased.

The cell voltage at the time of power generation, where the cross-linked structure was formed, was higher than that where the cross-linked structure was not formed (see comparative example 1). This is probably because since the formation of the cross-linked structure reduces the swelling of the catalyst electrode layer, the fuel gas or the oxidizer gas easily reaches the catalyst surface, and thus the reaction necessary for power generation was made to proceed satisfactory. However, although as the degree of cross-linking is excessively increased, the cell voltage is higher than that without cross-linking (comparative example 1), the cell voltage tends to be lowered slightly (comparison between examples 1 to 5 and example 6). This is probably because a large number of cross-linked structures are included, and thus the flexibility is lowered, with the result that a portion is produced which cannot make contact with recesses and projections in the surface of the ion exchange membrane. It has been estimated that the contact area is consequently decreased, and thus the resistance of ion conductivity is increased.

The durability time at a high temperature of 80°C was prolonged as the degree of cross-linking was increased.

This is probably because the density of the cross-linked structure was increased, and thus degradation such as deformation or decomposition was unlikely to be caused.

Comparative example 1

The same operation as in example 1 was performed using the anion conductive elastomer precursor and the monofunctional quaternarizing agent shown in Table 2. The results thereof are shown in Table 2. The thickness of a layer that includes the anion conductive elastomer composed of the anion conductive elastomer precursor and the monofunctional quaternarizing agent and the catalyst was the same as in example 1.

The water content was higher than the case where the multifunctional quaternizing agent was used. This is probably because no cross-linked structure was provided. The cell voltage when power generation was performed at 500 mA was lower than the cell voltages in examples 1 to 6. This is probably because since there was no presence of the cross-linked structure, thus the elastomer was swelled, the fuel gas or the oxidizer gas was prevented from reaching the catalyst surface, with the result that the reaction necessary for power generation was prevented from proceeding.

Furthermore, in comparative example 1, where there was no cross-linked structure, the durability time was shorter than the durability times in examples 1 to 6, where there was cross-linked structure. This is probably because since water was supplied to the catalyst electrode layer during power generation, the elastomer was swelled. When there is no cross-linked structure, the swelling causes the catalyst electrode layer to be deformed, and thus the fuel gas or the oxidizer gas is unlikely to reach the catalyst surface.

Table 2

| | Anion conductive elastomer precursor | Composition of quaternizing agent mixture | | 40°C, 90%RH water content (%) | Ion exchange capacity (mmol/g) | Cell voltage at power generation of 500 mA (V) | Durability time (hour) |
|---|---|---|---|---|---|---|---|
| | | Monofunctional quaternarizing agent | Multifunctional quaternizing agent | | | | |
| Example 1 | Anion conductive elastomer precursor 1 | Trimethylamine 30% aqueous solution 17.7 g (0.1 mol) | N, N, N', N'-tetramethylamine-1,6-hexanediamine 1.7 g (0.01 mol) | 30 | 1.7 | 0.60 | 92 |
| Example 2 | Anion conductive elastomer precursor 1 | Trimethylamine 30% aqueous solution 17.7 g (0.1 mol) | N, N, N', N'-tetramethylamine-1,6-hexanediamine 8.6 g (0.05 mol) | 25 | 1.7 | 0.61 | 125 |
| Example 3 | Anion conductive elastomer precursor 1 | Trimethylamine 30% aqueous solution 17.7 g (0.1 mol) | N, N, N', N'-tetramethylamine-1,6-hexanediamine 17.2 g (0.1 mol) | 22 | 1.7 | 0.61 | 155 |
| Example 4 | Anion conductive elastomer precursor 1 | Trimethylamine 30% aqueous solution 8.9 g (0.05 mol) | N, N, N', N'-tetramethylamine-1,6-hexanediamine 17.2 g (0.1 mol) | 17 | 1.7 | 0.61 | 160 |
| Example 5 | Anion conductive elastomer precursor 1 | Trimethylamine 30% aqueous solution 1.8 g (0.01 mol) | N, N, N', N'-tetramethylamine-1,6-hexanediamine 17.2 g (0.1 mol) | 10 | 1.7 | 0.60 | 162 |
| Example 6 | Anion conductive elastomer precursor 1 | Trimethylamine 30% aqueous solution 0.9 g (0.005 mol) | N, N, N', N'-tetramethylamine-1,6-hexanediamine 17.2 g (0.1 mol) | 5 | 1.7 | 0.55 | 145 |
| Comparative Example | Anion conductive elastomer precursor 1 | Trimethylamine 30% aqueous solution 17.7 g (0.1 mol) | No use | 38 | 1.7 | 0.53 | 32 |

(Method of synthesizing anion conductive elastomer precursors 2 to 6)

Anion conductive elastomer precursors 2 to 6 were obtained by using the styrene elastomer shown in Table 3 and performing the same operation as the method of synthesizing the anion conductive elastomer precursor 1.

Table 3

| | Styrene elastomer | | | | |
|---|---|---|---|---|---|
| | Structure composition | Young's modulus (MPa, 25°C) | Number average molecular weight | Aromatic content (mass %) | Hydrogenation rate (%) |
| Anion conductive elastomer precursor 2 | Polystyrene-poly (ethylene-butadiene)-polystyrene | 55 | 89.000 | 30 | 100 |
| Anion conductive elastomer precursor 3 | Polystyrene-poly (ethylene-butadiene)-polystyrene | 80 | 60,000 | 45 | 98 |
| Anion conductive elastomer precursor 4 | Polystyrene-poly (ethylene-butadiene)-polystyrene | 200 | 300,000 | 12 | 95 |
| Anion conductive elastomer precursor 5 | Polystyrene-poly (ethylenepropylene)-polystyrene | 120 | 100,000 | 38 | 100 |
| Anion conductive elastomer precursor 6 | Polystyrene-polybutadiene-polystyrene | 150 | 150,000 | 22 | 90 |

Examples 7 to 12

A catalyst electrode precursor layer composition was prepared by taking out 1 g of the anion conductive elastomer precursor shown in Table 4, dissolving it in 100 ml of chloroform, adding 2 g of a catalyst (catalyst in which platinum particles having a particle diameter of 2 to 10 nm were carried on carbon particles having a primary particle diameter of 30 to 50 nm) and dispersing them. This was applied on two carbon porous membranes (HGP-H-060 made by Toray Industries, Inc., its thickness of 200 μm: the gas diffusion layer), which was cut into the outer dimention of 23 mm square, and was thereafter dried, with the result that a gas diffusion electrode intermediate (the laminate structure of the carbon porous membrane/the catalyst electrode precursor layer) was obtained. The gas diffusion electrode intermediate was immersed in 10 ml of a mixture of the monofunctional quaternarizing agent and the multifunctional quaternizing agent shown in Table 4. After 48 hours, it was taken out, washed and dried, and thus a laminate was obtained. The thickness of the catalyst electrode layer in the laminate was the same as in example 1.

Except that instead of the anion exchange membrane, the carbon porous membrane (gas diffusion layer) used here was used, the same operation as in the method of measuring the water content was performed, and the water content of the laminate obtained was measured. Except that instead of the anion exchange membrane, the carbon porous membrane (gas diffusion layer) used here was used, the same operation as in the method of measuring the ion exchange capacity was performed, and the ion exchange capacity of the laminate obtained was measured.

Between these two laminates, the anion exchange membrane was sandwiched while the side where the anion conductive elastomer and the catalyst were present was the inside, and the membrane electrode assembly (MEA) was formed, and was assembled into the fuel cell.

According to the power generation output test method and the power generation durability test method described above, performance evaluation was performed. The results thereof are also shown in Table 4.

Even when as a base material to which the catalyst electrode precursor layer composition is applied, a carbon porous membrane functioning not as the anion exchange membrane but as the gas diffusion layer was used, the catalyst electrode layer and the laminate with which the fuel cell was formed and which satisfactorily function were obtained.

Table 4

| | Anion conductive elastomer precursor | Monofunctional quaternarizing agent | Multifunctional quaternizing agent | 40°C, 90%RH watercontent (%) | Ion exchange capacity (mmol/g) | Cell voltage at power generation of 500 mA (V) | Durability time (hour) |
|---|---|---|---|---|---|---|---|
| Example 7 | Anion conductive elastomer precursor 2 | Trimethylamine 30% aqueous solution 17.7 g (0.1 mol) | N, N, N', N'-tetramethylamine-1,4-butanediamine 14.4 g (0.1 mol) | 24 | 1.8 | 0.32 | 153 |
| Example 8 | Anion conductive elastomer precursor 2 | Triethylamine 10.1 g (0.1 mol) | N, N, N', N'-tetramethylamine-1,8-octandiamine 20.0 g (0.1 mol) | 18 | 1.5 | 0.55 | 147 |
| Example 9 | Anion conductive elastomer precursor 3 | Trimethylamine 30% aqueous solution 17.7 g (0.1 mol) | N, N, N', N'-tetramethylamine-1,6-hexanediamine 17.2 g (0.1 mol) | 58 | 3.5 | 0.65 | 161 |
| Example 10 | Anion conductive elastomer precursor 4 | Trimethylamine 30% aqueous solution 17.7 g (0.1 mol) | N, N, N', N'-tetramethylamine-1,2-ethylenediamine 11.6 g (0.1 mol) | 12 | 1.2 | 0.53 | 142 |
| Example 11 | Anion conductive elastomer precursor 5 | Diethylmethylamine 8.7 g (0.1 mol) | N, N, N', N'-tetramethylamine-1,6-hexanediamine 17.2 g (0.1 mol) | 35 | 2.4 | 0.63 | 125 |
| Example 12 | Anion conductive elastomer precursor 6 | Trimethylamine 30% aqueous solution 17.7 g (0.1 mol) | N, N, N', N'-tetramethylamine-1,6-hexanediamine 17.2 g (0.1 mol) | 18 | 1.4 | 0.53 | 111 |

**List of Reference Symbols**

1; cell partition wall
2; fuel distribution hole
3; oxidizer gas distribution hole
4; fuel chamber-side catalyst electrode layer (including gas diffusion layer)
5; oxidizer chamber-side catalyst electrode layer (including gas diffusion layer)
6; polymer electrolyte (anion exchange membrane)
7; anode chamber
8; cathode chamber

## Claims

**1.** A catalyst electrode layer comprising:

an anion conductive elastomer in which a quaternary base type anion exchange group is introduced into at least a part of an aromatic ring of a copolymer of an aromatic vinyl compound and a conjugated diene compound or a copolymer where a double bond of a main chain is partially or completely saturated by hydrogenating a conjugated diene part of the copolymer, and in which at least a part of the quaternary base type anion exchange group forms a cross-linked structure; and
an electrode catalyst.

**2.** The catalyst electrode layer according to claim 1,
wherein a ratio of the aromatic vinyl compound in the copolymer is 5 to 80 mass %.

**3.** The catalyst electrode layer according to claim 1,
wherein a water content of the anion conductive elastomer at a temperature of 40°C at a humidity of 90% RH is 1 to 90%.

**4.** The catalyst electrode layer according to claim 1,
wherein the quaternary base type anion exchange group forming the cross-linked structure has a quaternary ammonium group and an alkylene group.

**5.** A laminate in which the catalyst electrode layer according to claim 1 is formed on a gas diffusion layer or an anion exchange membrane.

**6.** A polymer electrolyte fuel cell comprising the laminate according to claim 5.

**7.** A method of manufacturing the catalyst electrode layer according to claim 1,
wherein a catalyst electrode precursor layer including an anion conductive elastomer precursor in which a group that can react with a quaternizing agent is introduced into at least a part of an aromatic ring of a copolymer of an aromatic vinyl compound and a conjugated diene compound or a copolymer where a double bond of a main chain is partially or completely saturated by hydrogenating a conjugated diene part of the copolymer and an electrode catalyst is brought into contact with a multifunctional quaternizing agent such that the group that can react with the quaternizing agent and the multifunctional quaternizing agent are made to react with each other to cross-link the anion conductive elastomer precursor with a quaternary base type anion exchange group.

**8.** The method of manufacturing the catalyst electrode layer according to claim 7,
wherein a ratio of the aromatic vinyl compound is 5 to 70 mass %.

**9.** The method of manufacturing the catalyst electrode layer according to claim 7,
wherein the group that can react with the quaternizing agent which is introduced into the aromatic ring is a halogen atom containing group, and the multifunctional quaternizing agent is an alkylene diamine compound.

**10.** A method of manufacturing the laminate according to claim 5,

wherein a catalyst electrode precursor layer including an anion conductive elastomer precursor in which a group that can react with a quaternizing agent is introduced into at least a part of an aromatic ring of a copolymer of an aromatic vinyl compound and a conjugated diene compound or a copolymer where a double bond of a main chain is partially or completely saturated by hydrogenating a conjugated diene part of the copolymer and an electrode catalyst is formed on the gas diffusion layer or the anion exchange membrane, and thereafter the catalyst electrode precursor layer and a multifunctional quaternizing agent are brought into contact.

Fig.1

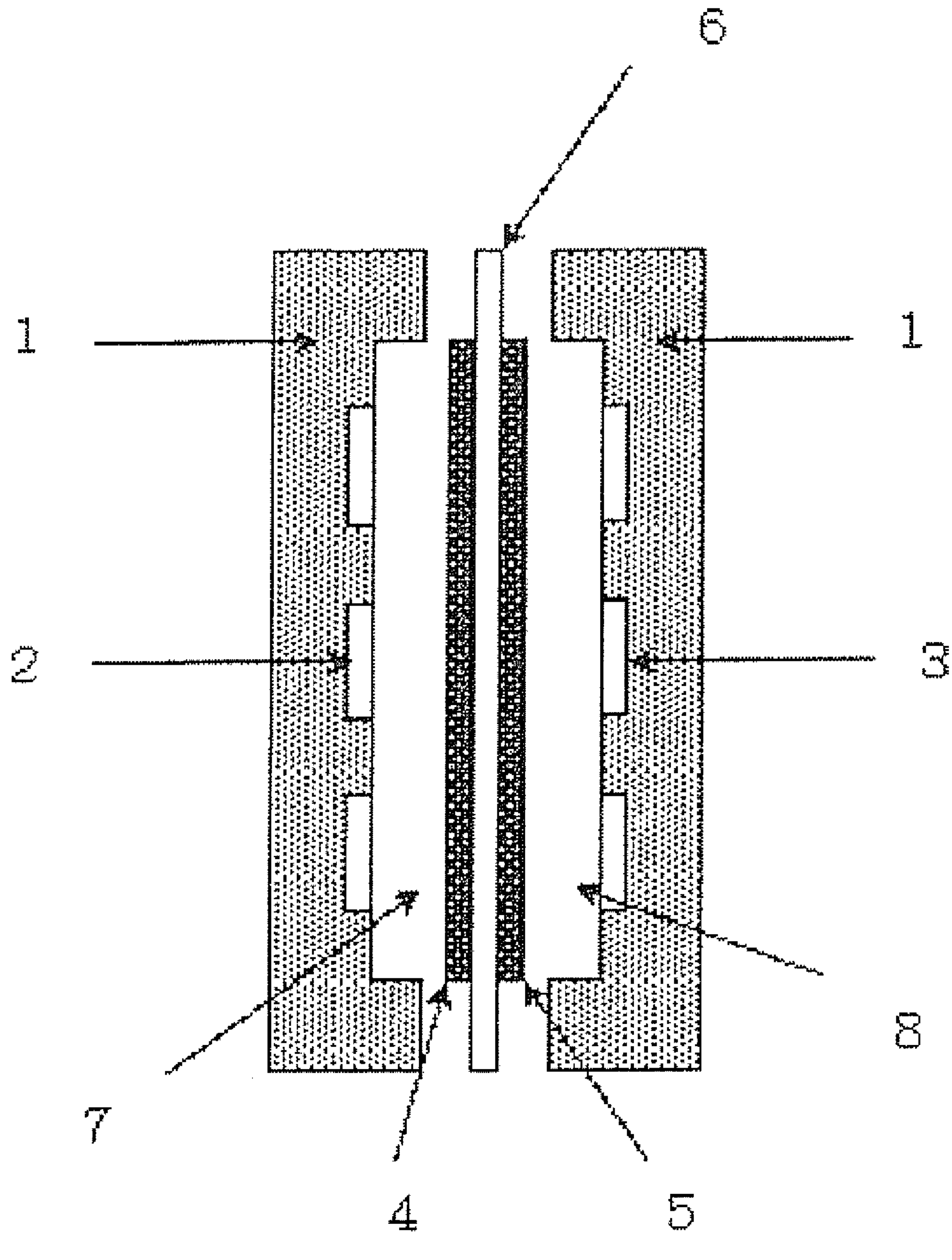

**INTERNATIONAL SEARCH REPORT**

International application No.
PCT/JP2013/055141

A. CLASSIFICATION OF SUBJECT MATTER
*H01M4/86*(2006.01)i, *H01M4/88*(2006.01)i, *H01M8/02*(2006.01)i, *H01M8/10*(2006.01)i, *H01B1/06*(2006.01)n

According to International Patent Classification (IPC) or to both national classification and IPC

B. FIELDS SEARCHED

Minimum documentation searched (classification system followed by classification symbols)
H01M4/86, H01M4/88, H01M8/02, H01M8/10, H01B1/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2007/072842 A1 (Tokuyama Corp.), 28 June 2007 (28.06.2007), claim 5; paragraphs [0079] to [0082], [0212] to [0222]; examples 1-1, 1-2, 2-1; tables 1, 2 & EP 1965456 A1 claim 5; paragraphs [0079] to [0082], [0212] to [0222]; examples 1-1, 1-2, 2-1; tables 1, 2 | 1-6<br>7-10 |
| A | JP 2003-86193 A (Tokuyama Corp.), 20 March 2003 (20.03.2003), paragraphs [0039] to [0045]; examples 1, 2, 7; tables 1, 2 (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
27 May, 2013 (27.05.13)

Date of mailing of the international search report
04 June, 2013 (04.06.13)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.
PCT/JP2013/055141

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-367626 A (Tokuyama Corp.), 20 December 2002 (20.12.2002), claims 1, 3; paragraphs [0015], [0018], [0022] to [0024] (Family: none) | 1-10 |
| A | JP 11-273695 A (Asahi Glass Co., Ltd.), 08 October 1999 (08.10.1999), paragraphs [0024], [0025], [0032] to [0037] (Family: none) | 7-10 |
| A | JP 9-223513 A (Kashima Kita Electric Power Corp.), 26 August 1997 (26.08.1997), paragraphs [0018] to [0020], [0050] to [0052] & EP 790658 A2 page 6, lines 9 to 34; page 10, lines 1 to 33 | 7-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003086193 A
- WO 2007072842 A